# EUROPÄISCHE PATENTANMELDUNG

(11) **EP 0 877 207 A2**
(43) Veröffentlichungstag der Anmeldung: **11.11.1998**
(21) Anmeldenummer: 98107879.3
(22) Anmeldetag: 29.04.1998
(51) Int. Cl.: F24C 15/10, F24C 3/08, F24C 3/12

(54) **Einbaugerät, insbesondere Einbauküchengerät**

(30) Priorität: 06.05.1997 DE 29708207 U
(71) Anmelder: ELECTROLUX SIEGEN GmbH, 57074 Siegen (DE)
(72) Erfinder: Müller, Volker, 57271 Hilchenbach (DE); Lorek, Manfred, 57074 Siegen (DE)
(74) Vertreter: Grosse, Wolfgang, Dipl.-Ing.

(57) **Zusammenfassung**

Ein Einbaugerät weist an seiner Frontseite eine Haltevorrichtung zur Aufnahme und Halterung von Bedienungselementen und Armaturen für Gas- und/oder Elektroanschlüsse auf, wobei die Haltevorrichtung mehrere auswechselbare Module (1, 6, 7) umfaßt. Wenigstens eines der Module ist ein für die jeweils benötigte technische Funktion ausgerüstetes Einsatzteil (6, 7), das seitlich an der Frontseite des Einbaugeräts angebracht ist und ausgewechselt werden kann. Durch den Austausch des Einsatzteils ist die Haltevorrichtung auf unterschiedliche Baugrößen und Typen von Einbaugeräten anpaßbar, und durch die seitliche Anordnung ist ein wartungs- und reparaturfreundlicher Zugang zu den servicerelevanten Teilen des Einbaugeräts möglich, ohne daß das Gerät aus dem Einbau entfernt werden muß.

## Beschreibung

Die Erfindung betrifft ein Einbaugerät nach dem Oberbegriff des Anspruchs 1.

Bei Einbaugeräten der vorgenannten Art, insbesondere bei Caravan-Kühlgeräten, befindet sich die Haltevorrichtung für die Bedienungselemente und die Armaturen über oder unter dem Einbaugerät und bildet mit dem Einbaugerät eine Einheit. Für die Wartung des Einbaugeräts bzw. den Austausch eines Bedienungselements an der Haltevorrichtung muß das komplette Einbaugerät ausgebaut werden. Ferner ist die Haltevorrichtung einstückig mit dem Einbaugerät verbunden, so daß es nicht möglich ist, die Bedienungseinheit des Einbaugerätes kundenspezifisch in der Tiefe nach vorne oder hinten zu verschieben. Um einem solchen Wunsche aber dennoch gerecht zu werden, muß auf der Geräteoberseite eine Vielzahl von Befestigungslöchern für die Haltevorrichtung vorgesehen werden. Die Folge sind hohe Kosten in der Werkzeuganfertigung als auch in der Weiterverarbeitung durch Verschließen der Lochungen beim Schäumvorgang für die Wandungen des Gerätes. Schließlich ist eine Anpassung der Haltevorrichtung auf unterschiedliche Gerätebreiten und Baumgegebenheiten nicht möglich.

Es ist daher die Aufgabe der vorliegenden Erfindung, ein Einbaugeräte der vorgenannten Art mit einer Haltevorrichtung zu schaffen, die an unterschiedliche räumliche Vorgaben anpaßbar und kostengünstig herstellbar ist. Ferner soll die Haltevorrichtung an unterschiedliche Einbaugerätetypen anpaßbar sein und für Wartungs- und Reparaturarbeiten einen einfachen Zugang zu den servicerelevanten Teilen des Einbaugerätes ermöglichen, ohne daß das Gerät aus dem Einbau zu entfernen ist.

Diese Aufgabe wird mit einer Haltevorrichtung, wie sie in Anspruch 1 vorgeschlagen ist, gelöst. Vorteilhafte Ausgestaltungen sind in den Unteransprüchen gekennzeichnet.

Die Modulbauweise ermöglicht ein einfaches Austauschen von Teilen der Haltevorrichtung, um diese an die vorgegebenen Einbauverhältnisse anpassen zu können. Wenn die Haltevorrichtung zumindest ein an einer Frontplatte angeordnetes austauschbares Einsatzteil aufweist, kann sie sowohl räumlich an unterschiedliche Baugrößen angepaßt werden, als auch für unterschiedliche Einbaugerätetypen modifiziert werden. Dabei stellt die Frontplatte eine Basisanordnung dar, die um ein austauschbares Einsatzteil ergänzt ist, so daß die Haltevorrichtung als Baukastensystem zusammengebaut wird. Die Haltevorrichtung kann für unterschiedliche technische Funktionen jeweils ein dafür ausgerüstetes Einsatzteil aufweisen, so daß die Haltevorrichtung modulartig zu einer kompletten Steuereinheit ververvollständigt wird.

In einer vorteilhaften Ausgestaltung der Erfindung ist ein Einsatzteil seitlich an der Frontplatte angeordnet, so daß die Haltevorrichtung auf unterschiedliche Breiten einstellbar ist. Zur Anpassung an unterschiedlich breite Einbaugeräte muß dabei lediglich das geeignete Einsatzteil seitlich befestigt werden. Vorzugsweise sind zwei Einsatzteile vorgesehen, die jeweils auf gegenüberliegenden Seiten der Frontplatte angeordnet sind, so daß die Basisanordnung der Frontplatte mittig zu dem Einbaugerät angeordnet ist. Neben den ästhetischen Gesichtspunkten wird dadurch auch die Auswechselbarkeit und Zugänglichkeit zu den Armaturen verbessert, da die seitlich angeordneten Einsatzteile sowohl nach vorne als auch bei einer entsprechenden Positionierung der Haltevorrichtung von der Seite her zugänglich sind. Die Befestigung der Haltevorrichtung wird erleichtert, wenn eine Bodenplatte vorgesehen ist, die im wesentlichen senkrecht zu der Frontplatte angeordnet ist. Insbesondere kann die Haltevorrichtung dadurch in einfacher Weise auf einer horizontalen Oberfläche befestigt werden.

Wenn an der Frontplatte mehrere Öffnungen vorgesehen sind, durch die Bedienungselemente für das Einbaugerät durchführbar sind, können in einem mittleren Bereich der Frontplatte Bedienungselemente für Standardfunktionen, wie der Steuerung der Heizleistung bei einem Herd, vorgesehen werden, deren Position für die meisten Einbaugeräte gleich ist. Andere Bedienungselemente können je nach Reparaturanfälligkeit angeordnet werden, wobei die öfters zu wartenden Bauteile vorzugsweise an den auswechselbaren Einsatzteilen angeordnet sind.

Vorzugsweise sind an der Haltevorrichtung Mittel zum Stützen bzw. Lagern der Bedienungselemente vorgesehen, so daß die Bedienungselemente auch bei Vibrationen fest an der Haltevorrichtung gehalten sind. Der Haltevorrichtung ist kostengünstig herstellbar, wenn sie aus Kunststoff hergestellt ist und die Mittel zum Stützen bzw. Lagern der Bedienungselemente bzw. Armaturen integral mit der Haltevorrichtung geformt sind.

Um eine weitere Flexibilität bei der Anpassung an unterschiedliche räumliche Gegebenheiten zu erhalten ist die Haltevorrichtung über Befestigungsmittel an einem Bauteil oder Einbaugerät derart gehalten, daß die Position der Haltevorrichtung zu dem Bauteil oder Einbaugerät verstellbar ist. Insbesondere bei Küchen in beengten Raumverhältnissen, wie in Booten oder Caravanen, muß der zur Verfügung stehende Baum bestmöglich genutzt werden, so daß die Haltevorrichtung nach hinten versetzt wird, damit die Armaturen nicht in den Küchenraum hervorstehen. Eine einfache und billige Befestigungsmöglichkeit stellen dabei Schnappverbindungen dar, wobei zur einfachen Montage ein Bodenteil fest mit einem Bauteil des Einbaugerätes verbunden wird, um die Haltevorrichtung über eine Schnappverbindung mit dem Bauteil zu verbinden.

In einer vorteilhaften Ausgestaltung der Erfindung sind ein Einsatzteil mit einer Gasarmatur versehen und eine weiteres Einsatzteil mit einer elektrischen Steuereinrichtung ausgestattet, so daß die Haltevorrichtung für gas- und elektrisch betriebene Einbaugeräte einsetzbar ist.

Die Erfindung wird nachfolgend anhand eines Ausführungsbeispiels mit Bezug auf die beigefügten Zeichnungen näher erläutert. Es zeigen:
- Fig.1: eine Draufsicht eines erfindungsgemäßen Ausführungsbeispiels einer Haltevorrichtung im eingebauten Zustand;
- Fig. 2: eine Vorderansicht der Haltevorrichtung im Rohzustand;
- Fig. 3: eine Draufsicht auf die Haltevorrichtung der Fig. 2;
- Fig. 4: eine Unteransicht der Haltevorrichtung der Fig. 2;
- Fig. 5: eine Seitenansicht der Haltevorrichtung;
- Fig. 6: eine Schnittansicht entlang der Linie A-A in Fig. 3;
- Fig. 7: eine Schnittansicht entlang der Linie B-B in Fig. 2;
- Fig. 8: eine Schnittansicht entlang der Linie C-C in Fig. 3;
- Fig. 9: eine Schnittansicht entlang der Linie D-D in Fig. 3;
- Fig. 10A, 10B, 10C: ein erstes Ausführungsbeispiel eines Einsatzteils in der Vorder-, Seitenansicht und Draufsicht;
- Fig. 11A, 11B, 11C: ein zweites Ausführungsbeispiel eines Einsatzteils in der Vorder-, Seitenansicht und Draufsicht, und
- Fig. 12A, 12B, 12C: ein Befestigungsmittel für die Haltevorrichtung in der Vorder-, Seitenansicht und Draufsicht.

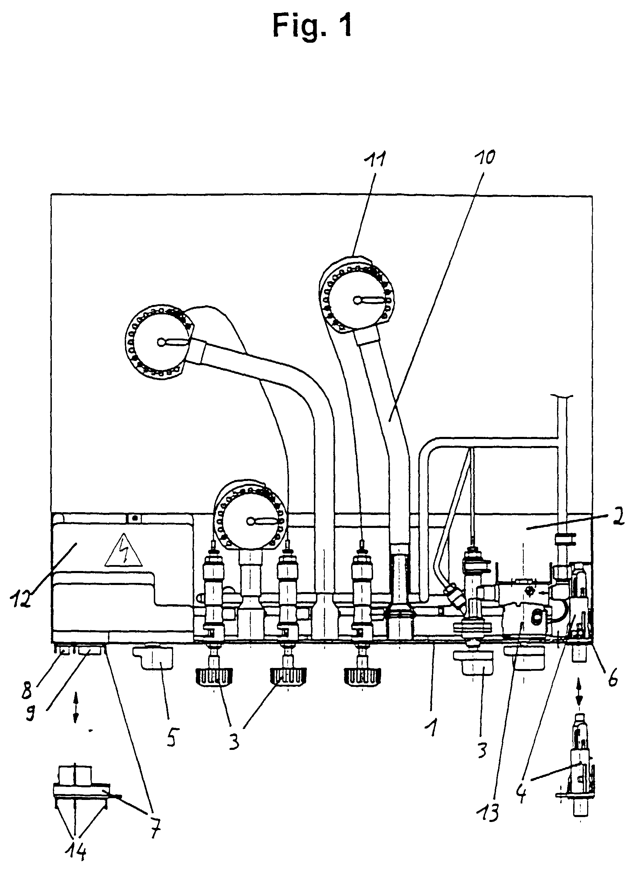

In Fig. 1 ist ein kombiniertes Koch- und Kühlgerät gezeigt, welches an eine Gasquelle und eine Stromquelle angeschlossen ist. Das Koch- und Kühlgerät besitzt eine erfindungsgemäße Haltevorrichtung, die eine nach vorne ausgerichtete Frontplatte 1 und eine senkrecht dazu ausgerichtete Bodenplatte 2 aufweist. Die Frontplatte 1 ist von mehreren Bedienungselementen durchgriffen, die jeweils einen drehbaren Steuerknopf 3 aufweisen. Die mittleren Steuerknöpfe 3 steuern dabei die Gaszufuhr für drei Gasbrenner, zu denen jeweils eine Gasleitung 10 und ein Thermoelement 11 verläuft.

An der in Fig. 1 rechten Seite ist an der Frontplatte 1 ein Einsatzteil 6 angeordnet, in dem eine Zündeinrichtung 4 aufgenommen ist. Die Gasarmatur 4 ist entsprechend dem Pfeil aus dem Einsatzteil 6 für Reparaturzwecke herausnehmbar und wieder einsteckbar.

An der linken Seite der Frontplatte 1 ist ein Halter 7 vorgesehen, in dem ein erster Schalter 8 und ein zweiter Schalter 9 aufgenommen sind. In dem linken Bereich befindet sich eine elektrische Einheit, die mit einem Drehschalter 5 steuerbar ist und die von einem Gehäusedeckel 12 abgedeckt ist. Die Schalter 8 und 9 dienen dabei zum An- bzw. Ausschalten des Kühlgeräts. Der Halter 7 ist mit der Frontplatte 1 lösbar verbunden und kann entsprechend dem dargestellten Pfeil abgenommen werden. An dem Halter 7 sind Sicherheitswände 14 vorgesehen, um eine versehentliche Betätigung der Schalter 8 und 9 durch ein Anlehnen an dem Koch- und Kühlgerät zu verhindern.

Neben der Zündeinrichtung 4 ist eine Regeleinrichtung 13 für das Kühlgerät vorgesehen. Durch die Bedienungs- und Armatureinheit kann das komplette Koch- und Kühlgerät gesteuert werden. Das Kühlgerät befindet sich unterhalb der Bedienungs- und Armatureinheit, während die Kocheinrichtung mit den Gasbrennern im wesentlichen hinter der Bedienungs- und Armatureneinheit angeordnet ist.

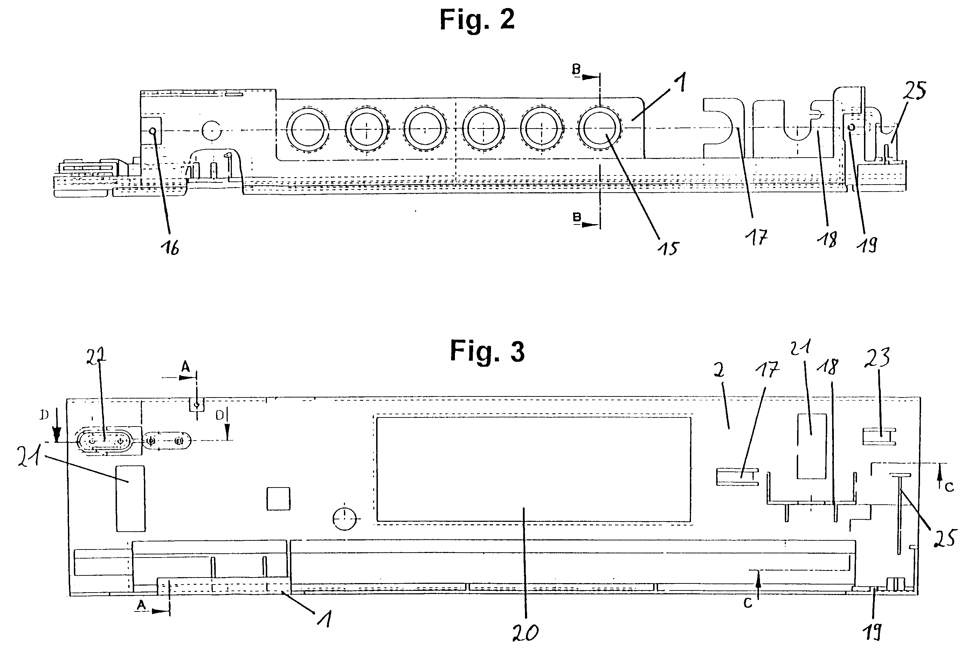

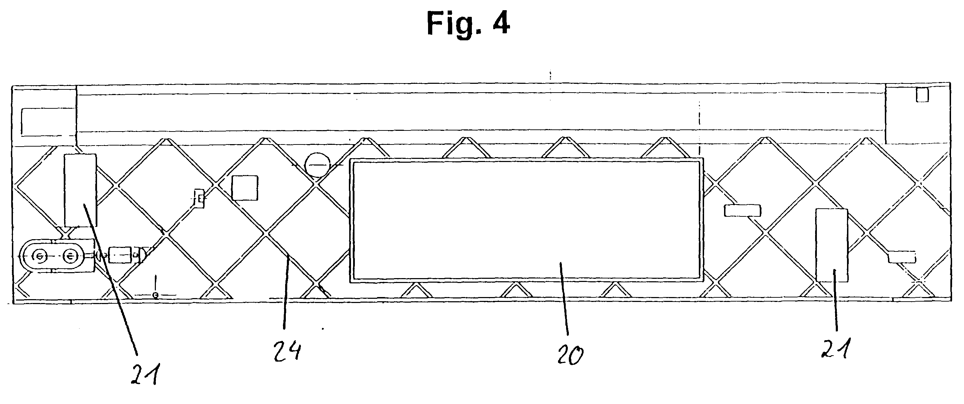

Entsprechend den Figuren 2 bis 4 ist die Frontplatte 1 in einem mittleren Bereich mit mehreren Öffnungen 15 versehen, durch die die Bedienungselemente gesteckt werden können. Zur Befestigung des Halters 7 ist ein Befestigungsloch 16 vorgesehen, so daß der Halter 7 über eine Schraubverbindung mit der Frontplatte 1 verbunden werden kann. Auf der gegenüberliegenden Seite ist ein Befestigungsloch 19 für das Einsatzteil 6 angeordnet. Da die einzelnen Bedienungselemente teilweise ein größeres Gewicht besitzen, sind für sie Einrichtungen zum Abstützen und Führen vorgesehen. So ist ein Stützelement 17 integral mit der Bodenplatte 2 gebildet, das eine halbkreisförmige Öffnung zum Führen eines Rohrs aufweist. Ein Lagerelement 18 ist mit einer Aufnahme versehen, in die ein Teil der Regeleinrichtung 13 für das Kühlgerät eingesetzt wird.

In einem mittleren Bereich ist in der Bodenplatte 2 eine Bodenöffnung 20 vorgesehen. Zu beiden Seiten der Bodenöffnung 20 ist jeweils eine Aussparung 21 ausgebildet, die zur Befestigung der Bodenplatte verwendet wird. Für die elektrische Einrichtung ist integral mit der Bodenplatte 2 ein Teil einer Kabelklemmvorrichtung 22 verbunden. Die Bodenplatte 2 wird auf ihrer Unterseite durch Streben 24 verstärkt, so daß die Bodenplatte selber relativ dünn ist.

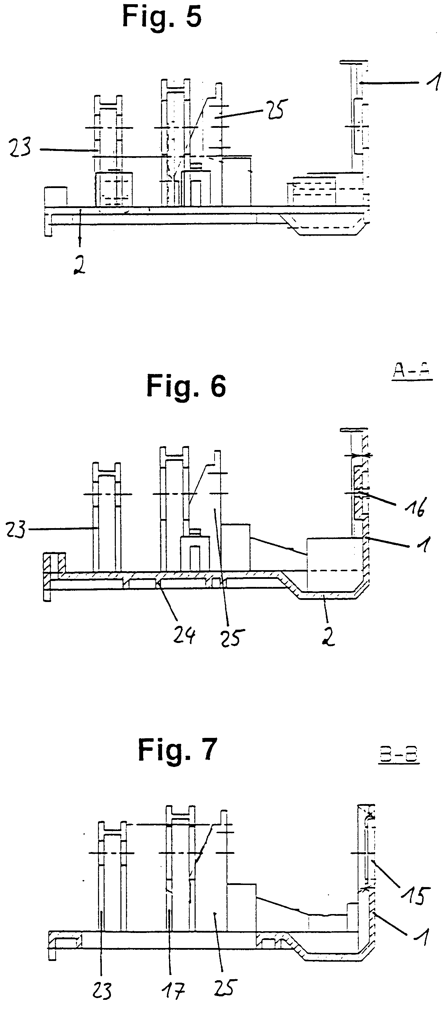

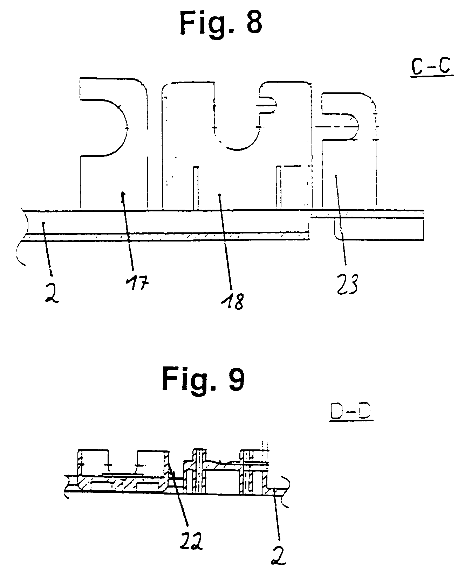

Wie insbesondere aus den Detailansichten der Fig. 5 bis 9 erkennbar ist, haben die Stütz- und Führungselemente speziell auf die Bedienungselemente ausgerichtete Formen. Dabei liegt die Bodenplatte 2 in dem Bereich der Stütze 23, des Stützelements 17 und des Lagerelements 18 nicht auf der Oberfläche eines angrenzenden Bauteils auf, so daß die Flexibilität der Stützelemente erhöht wird. Die Bodenplatte 2 liegt in einem vorderen Bereich 2 und einem hinteren Bereich auf einem angrenzenden Bauteil auf und weist einen mittleren, erhöhten Bereich auf.

Im Bereich der Zündeinrichtung 4 ist ein Zündeinrichtungshalter 25 vorgesehen, der die Gasarmatur 4 beim Einstecken und Herausnehmen führt.

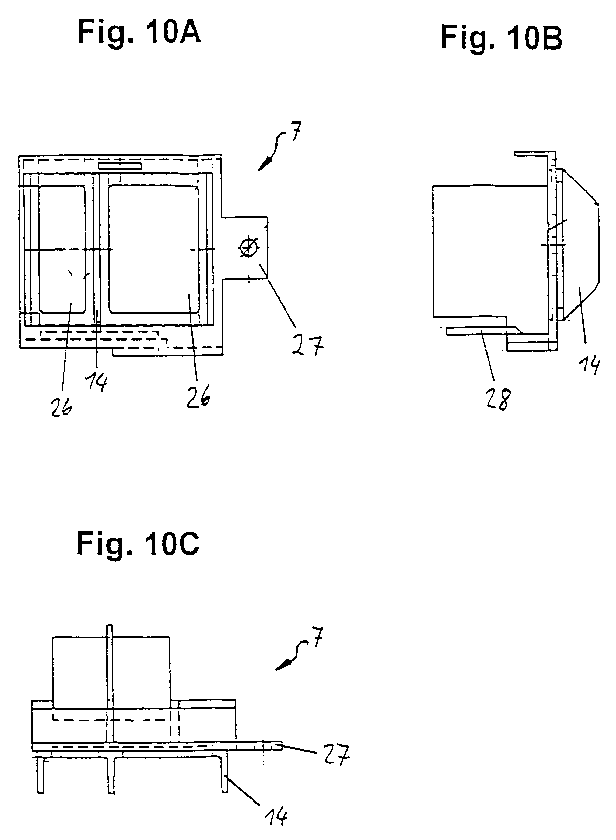

In der Fig. 10A ist der Halter 7 in der Vorderansicht dargestellt. Der Halter 7 besitzt zwei Öffnungen 26, die rahmenartig umgeben sind. Zur Verbindung mit der Frontplatte 1 ist seitlich ein Vorsprung 27 vorgesehen, in dem eine Öffnung für eine Schraubverbindung gebildet ist. Entsprechend der Seitenansicht der Fig. 10B ist seitlich zu den Öffnungen 26 jeweils eine Sicherheitswand 14 vorgesehen, um eine versehentliche Betätigung der Schalter 8 und 9 zu verhindern. Der Halter 7 ist an seiner Unterseite mit einem Boden 28 versehen, der in Eingriff mit einer Stützeinrichtung an der Bodenplatte 2 gebracht werden kann.

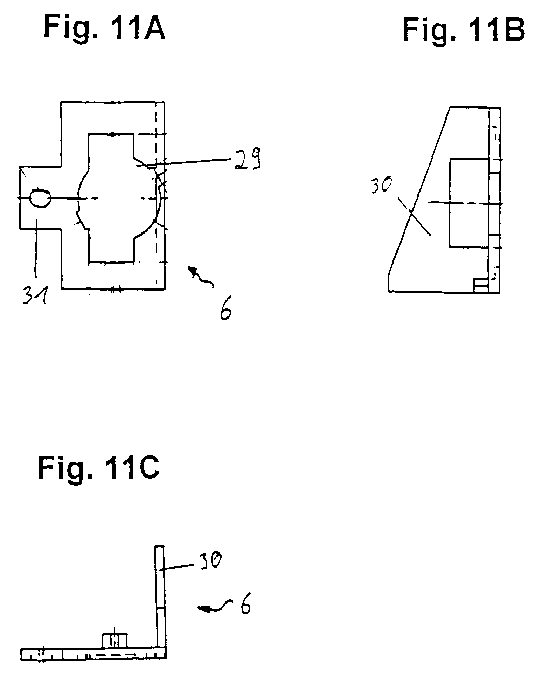

Das in Fig. 11A, B und C dargestellte Einsatzteil 6 weist eine Öffnung 29 für die Zündeinrichtung 4 auf. Seitlich zu der Öffnung 29 ist ein Vorsprung 31 vorgesehen, der in Eingriff mit der Frontplatte 1 bzw. dem Befestigungsloch 19 gebracht werden kann. Wie aus der Seitenansicht der Fig. 11B erkennbar ist, besitzt das Einsatzteil 6 eine Seitenwand 30, die den seitlichen Abschluß des Haltevorrichtungs bildet. Wenn das Einsatzteil 6 mit der Seitenwand 30 von der Frontplatte 1 abmontiert ist, ist die Gasarmatur 13 gleichzeitig von vorne und von der Seite her zugänglich.

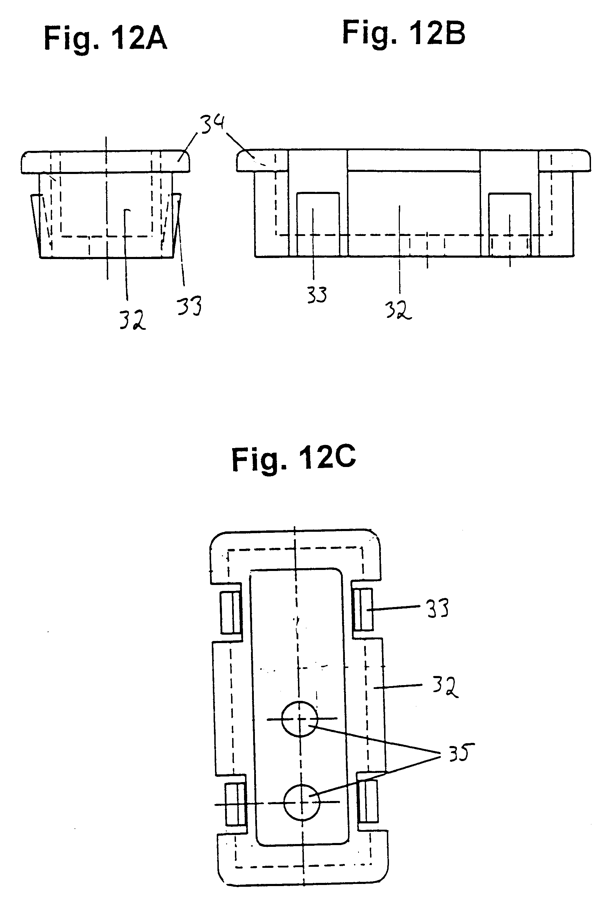

In den Fig. 12A, B und C ist ein Befestigungselement für die Haltevorrichtung dargestellt. Das Befestigungselement besteht aus einem wannenförmigen Körper mit Wänden 32, an denen Schnapper 33 vorgesehen sind. Die Wände 32 besitzen einen Band 34, der über die Wände 32 hervorsteht. In dem Bodenbereich des Befestigungselements sind zwei Löcher 35 vorgesehen, die wahlweise mit einer Schraubverbindung versehen sind.

Für die Befestigung der Haltevorrichtung werden die Befestigungselemente in die Aussparungen 21 eingesetzt und mittels der Löcher 35 über eine Schraubverbindung mit dem Bauteil verbunden. Für eine Positionierung der Haltevorrichtung können sowohl mehrere Löcher 35 in dem Boden vorgesehen werden, so daß die Befestigungselemente an dem Loch in dem Bauteil versetzt werden können. Die Befestigungselemente können auch fest mit dem Bauteil verbunden sein und mehrere Bast- und Schnappverbindungen aufweisen. Die Haltevorrichtung wird dann über einen Teil dieser Bast- und Schnappverbindungen gehalten und kann über ein Lösen und ein Verriegeln der Fast- und Schnappverbindungen in einer verschobenen Position versetzt werden.

## Patentansprüche

1. Einbaugerät, insbesondere Einbauküchengerät, mit einer an der Frontseite des Einbaugerätes zugänglichen Haltevorrichtung zur Aufnahme und Halterung von Bedienungselementen und Armaturen für Gas- und/oder Elektroanschlüsse, **dadurch gekennzeichnet, daß** die Haltevorrichtung aus mehreren auswechselbaren Modulen (1, 6, 7) zusammengesetzt und an dem Einbaugerät austauschbar befestigt ist.

2. Einbaugerät nach Anspruch 1, **dadurch gekennzeichnet, daß** die Module der Haltevorrichtung wenigstens eine Frontplatte (1) und daran angeordnete austauschbare Einsatzteile (6, 7) aufweisen.

3. Einbaugerät nach Anspruch 1, **dadurch gekennzeichnet, daß** ein Einsatzteil (6, 7) seitlich an der Frontplatte (1) angeordnet ist.

4. Einbaugerät nach Anspruch 2 oder 3, **dadurch gekennzeichnet, daß** zwei Einsatzteile (6, 7) vorgesehen sind, die jeweils auf gegenüberliegenden Seiten an der Frontplatte (1) angeordnet sind.

5. Einbaugerät nach einem der Ansprüche 1 bis 4, **dadurch gekennzeichnet, daß** die Haltevorrichtung eine Bodenplatte (2) aufweist, die im wesentlichen senkrecht zu der Frontplatte (1) ausgebildet ist.

6. Einbaugerät nach einem der Ansprüche 1 bis 5, **dadurch gekennzeichnet, daß** an der Frontplatte (1) mehrere Öffnungen (15) vorgesehen sind, durch welche die Bedienungselemente (3, 5) für das Einbaugerät durchführbar sind.

7. Einbaugerät nach einem der vorhergehenden Ansprüche, **dadurch gekennzeichnet, daß** an der Haltevorrichtung Mittel zum Stützen bzw. Lagern (15, 17, 18, 23, 25) der Bedienungselemente/und oder Armaturen (3, 4, 5, 13) vorgesehen sind.

8. Einbaugerät nach Anspruch 7, **dadurch gekennzeichnet, daß** die Haltevorrichtung aus Kunststoff hergestellt ist und die Mittel zum Stützen bzw. Lagern (15, 17, 18, 23, 25) der Bedienungselemente und /oder Armaturen (3, 4, 5, 13) integral mit der Haltevorrichtung ausgebildet sind.

9. Einbaugerät nach einem der vorhergehenden Ansprüche, **dadurch gekennzeichnet, daß** die Haltevorrichtung über Befestigungsmittel (21, 32, 33, 34) an dem Einbaugerät derart gehalten ist, daß die Position der Haltevorrichtung zu dem Einbaugerät verstellbar ist.

10. Einbaugerät nach Anspruch 9, **dadurch gekennzeichnet, daß** die Befestigungsmittel ein Bodenteil mit mehreren Löchern (35) aufweisen und der Haltevorrichtung über mindestens eine Schnappverbindung (32, 33, 34) an dem Bodenteil gehalten ist.

11. Einbaugerät nach Anspruch 9 oder 10, **dadurch gekennzeichnet, daß** das Bodenteil aus einem im wesentlichen wannenförmigen Kunststoffteil gebildet ist, welches an seinen Seitenwänden (32) ein oder mehrere Schnappelement(e) (33) aufweist.

12. Einbaugerät nach einem der vorhergehenden Ansprüche, **dadurch gekennzeichnet, daß** ein Einsatzteil (6) mit einer Zündeinrichtung (4) verbunden ist, wobei die Zündeinrichtung (4) in das Einsatzteil (6) einsteckbar ist.

13. Einbaugerät nach Anspruch 12, **dadurch gekennzeichnet, daß** das Einsatzteil (6) eine Öffnung (29) für die Zündeinrichtung (4) aufweist und eine seitliche Außenwand (30) in Richtung der Öffnung (29) besitzt, die den seitlichen Abschluß der Haltevorrichtung bildet.

14. Einbaugerät nach einem der vorhergehenden Ansprüche, **dadurch gekennzeichnet, daß** ein Einsatzteil durch einen Halter (7) für Schaltelemente (8, 9) gebildet ist.

15. Einbaugerät nach Anspruch 14, **dadurch gekennzeichnet, daß** zwei Schalter (8, 9) an dem Halter (7) vorgesehen sind, die jeweils von Sicherheitswänden (14) umgeben sind.

16. Haltevorrichtung für die Bedienungselemente und/oder Armaturen für ein Einbauküchengerät, insbesondere ein kombiniertes Koch- und Kühlgerät, **dadurch gekennzeichnet, daß** die Haltevorrichtung aus mehreren auswechselbaren Modulen (1, 6, 7) zusammengesetzt und an dem Einbaugerät austauschbar befestigt ist und die Bedienungselemente bzw. Armaturen für die Steuerung des Koch- und Kühlgeräts vorgesehen sind, wobei die Bedienungselemente in einem mittleren Bereich zur Einstellung der Wärmezufuhr an dem Kochgerät dienen, die Bedienungselemente in einem seitlichen Bereich zur Steuerung des Kühlgeräts geeignet sind und die Bedienungselemente in dem anderen seitlichen Bereich zum Ein- und Abschalten des Kühlgeräts dienen.
